Europäisches Patentamt

European Patent Office

Office européen des brevets

(11) Publication number: **0 013 667**
**B1**

## EUROPEAN PATENT SPECIFICATION

(45) Date of publication of patent specification: **08.06.83**

(51) Int. Cl.³: **A 61 C 17/04**

(21) Application number: **80830001.6**

(22) Date of filing: **11.01.80**

(54) **A liquid separating and evacuating device for fluid suction equipment and, in particular, for dental surgery equipment.**

(30) Priority: **15.01.79 IT 4000579**

(43) Date of publication of application:
**23.07.80 Bulletin 80/15**

(45) Publication of the grant of the patent:
**08.06.83 Bulletin 83/23**

(84) Designated Contracting States:
**AT BE CH DE FR GB LU NL SE**

(56) References cited:
**DE - A - 2 713 321**

(73) Proprietor: **Officine Augusto CATTANI & C. S.p.A.**
**Via Mantova, 90/A**
**I-43100 Parma (IT)**

(72) Inventor: **Cattani, Augusto**
**Via Zanardi, 12**
**Parma (IT)**

(74) Representative: **Bonfreschi, Mario**
**Bugnion S.p.A. Viale Trento Trieste, 25**
**I-41100 Modena (IT)**

Courier Press, Leamington Spa, England

# A liquid separating and evacuating device for fluid suction equipment and, in particular, for dental surgery equipment.

The invention has as its subject a liquid separating and evacuating device for fluid suction equipment, and in particular, for dental surgery equipment.

During treatment given inside the mouth — dental treatment for example — it is impossible for the patient to swallow the saliva produced by salivary glands located in the mouth itself. Furthermore, while the said treatment is taking place, the flow of blood and the use of various liquids is frequent, and such liquids need to be evacuated along with the saliva.

For this purpose a probe connected to a suction pump is inserted into the patient's mouth for the purpose of evacuating liquids held inside the mouth itself.

The fluid extracted — normally consisting of air, saliva, blood and various other liquids, depending upon the type of treatment being given — can be made to pass through the pump and discharged externally. To do this, however, can jeopardize satisfactory operation and shorten the lifespan of the pump, since liquids present in the fluid are corrosive, and cause encrustment.

In order to overcome this particular problem, a device can be inserted in the suction tube-line between the pump and the probe, which separates the liquids from the air and looks after the external discharge of said liquids.

Centrifugal separating devices exist at the present time, consisting virtually of a container into which the sucked fluid enters at a tangential direction. In this way the liquids adopt a vertical downward motion and are discharged in a continuous fashion from below.

These said devices are provided with a float which, with the use of suitable contrivances, interrupts the suction of the pump at the moment the liquid inside the container reaches too high a level, and when this occurs, the liquid is charged by force of gravity. When the level of the liquid drops, the float sets the suction pump back in motion, and the liquid vortex is reestablished.

One problem with this type of separating device is that it requires a motor of high power to drive the suction pump in order to enable the suction circuit to operate properly.

Another problem is that the suction pump is constantly and rapidly switched on and off when the quantity of liquid arriving is high.

Another device exists — described in DE—A1—2713321 and specified in the prior art portion of claim 1 of the present invention — which basically comprises two chambers set one above the other, the bottom of each chamber exhibiting a valve. Provision is made within the upper chamber of such a device for a float which, as a result of a rise in the level of liquid in the upper chamber, lifts and triggers a diaphragm by pneumatic means, the diaphragm in turn being connected to a tappet in mechanical fashion, and the tappet likewise mechanically connected to both of the chamber-bottom valves, so that, according to the diaphragm's being raised or lowered, the tappet itself raises or lowers dragging with it the chamber-bottom valves which duly open or close. The chamber-bottom valves are disposed such, that when the upper-chamber-valve opens the lower-chamber-valve closes, and vice-versa; in this way fluids can pass from the upper chamber to the lower, and from the lower chamber to the outside, without interrupting the function of the suction pump.

Whilst able to resolve those problems aforementioned, such a device is nonetheless hampered by the marked disadvantage of being complex in construction and therefore expensive to make. Given that the tappet is located internally of a cavity provided in the float connecting-rod, there will be the further possibility that the tappet itself become encrusted and so cause difficulties with regard to its own slide in relation to the float — hence bringing about incorrect function of the device as a whole. Complexity of the device in constructional terms also means that it is difficult to keep clean and to service.

It is also possible that, during normal working of a device of the kind, frothing or foaming will occur as a result of the gurgle of outside air which enters in through the lower chamber-bottom-valve in the process of its being opened. The existence of such froth or foam, which must inevitably form within devices of this type, represents an especial damage-risk as it is the cause of air-line blockages which lead to incorrect function of the device overall, or even to total breakdown thereof. The device set forth in DE—A1—2713321 is particularly susceptible to the build-up of such froth/foam by dint of its complex construction, which involves a considerable number of markedly small-bore/section air-ducts.

One object of the invention described herein is that of by-passing the above drawbacks by providing a separating and evacuating device having no need of a high-power motor to drive its suction pump, and which not only avoids constant and rapid switching on and off of the pump during normal working whilst at the same time separating and evacuating a large quantity of fluid matter, but also is simple and economical in terms both of construction and of servicing.

Another object of the invention is that of providing a separating and evacuating device of extreme reliability, yet simple from the operational point of view.

These and other advantages are provided by the liquid separating and evacuating device described herein which comprises in the same way as the prior art device disclosed in DE—A1—2713321:

— a first chamber into which extracted fluid arrives, designed to bring about separation of the liquid and air constituting said fluid and kept at lower than atmospheric pressure throughout operation of the device;

— a second chamber positioned beneath said first chamber;

— a pneumatic valve whose obturation means consists of a diaphragm actuated by a pneumatic distributor tripped by the level of liquid present within the first chamber, said pneumatic valve, in a first position of the diaphragm, places the second chamber in communication with the atmosphere via an external channel, thereby creating a pressure level within said second chamber which is substantially identical to that of the atmosphere when the level of liquid in said first chamber is lower than a pre-set value;

— two chamber-bottom valve means, an upper one of which is designed for alternate admission and prevention of passage of liquid from said first chamber to said second chamber, and the lower one of which is designed for alternate admission and prevention of passage of liquid out of said second chamber, the lower chamber-bottom valve means being arranged in such a way that passage of liquid out of said chamber is allowed only on the condition that the pressure therein approximates to that of the atmosphere and is prevented on the condition that the pressure in said first and second chambers is approximately equal.

This device is — according to the invention — characterised

— in that said pneumatic valve in a second position of the diaphragm places the second chamber in communication with ·the first chamber via the external channel, thereby creating a pressure level within said second chamber which is substantially identical to that of said first chamber when the level of liquid therein is above said pre-set value;

— and in that the upper chamber-bottom-valve means is arranged in such a way that passage of liquid from the first to the second chamber is allowed only on the condition that the pressure in the two chambers is approximately equal and prevented on the condition that the pressure in the second chamber approximates to that of the atmosphere.

Further features and advantages of the invention will emerge more clearly from the detailed description of one preferred but not exclusive embodiment of the device that follows, illustrated strictly as an unlimitative example with the aid of accompanying drawings, in which:

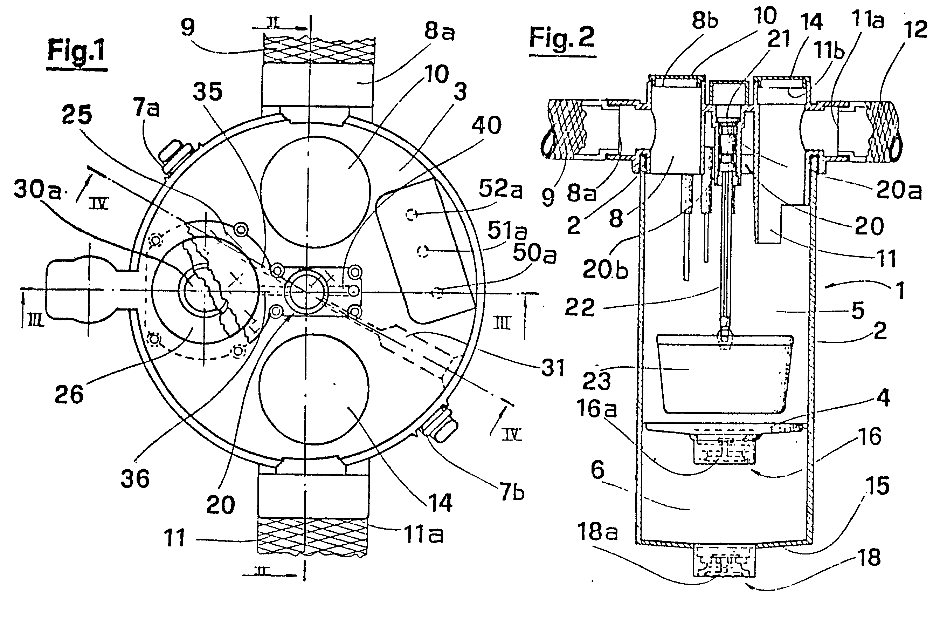

fig. 1 shows, in a view from above, the device to which the invention relates, with certain parts removed in order that others may be seen more clearly;

fig. 2 shows, in smaller scale, a section through the device along the plane marked by II—II in fig. 1;

fig. 3 shows, in smaller scale, a section through the device along the plane marked by III—III in fig. 1;

fig. 4 shows, in smaller scale, a section through the device along the plane marked by IV—IV in fig. 1.

The separating and evacuating device 1 to which the invention relates consists virtually of a cylindrical container 2 placed on a vertical axis, the upper edge 2a of which is hermetically connected through two elastic rings 7a and 7b to a covering member 3. The container 2 is divided by means of a partition 4, positioned substantially horizontal, into two areas that constitute a first chamber 5, and a second chamber 6 placed beneath the first chamber 5.

The first chamber 5 communicates directly with a suction pipe 8 machined in the covering member 3, which in turn is connected by way of a first flexible tube 9 — one extremity of which is visible in the drawing — to a suction pump (not shown). During operation, the first chamber 5 is maintained by the said suction pump at a pressure below that of the atmosphere. The suction pipe 8 has two extremities 8a and 8b to either one of which the flexible tube 9 may be connected, depending upon space available for installation of the device. In the example illustrated the tube 9 is connected to extremity 8a while extremity 8b is sealed by a first cover 10. The first chamber 5 communicates directly with an inlet pipe 11 machined in the covering member 3 and connecting in-turn by way of a second flexible tube 12 — one extremity of which is visible in the drawing — to one or more probes which extract fluid from the patient's mouth.

When the device is in operation, the fluid extracted — liberated of any solid bodies by a filter (not shown) located in the inlet pipe 11 — passes into the first chamber 5 wherein separation of the liquids from the air takes place, the former dropping toward the bottom of said chamber. The inlet pipe 11 has two extremities 11a and 11b to either one of which flexible tube 12 aforesaid may be connected, depending upon space available for installation of the device. In the example illustrated the tube 12 is connected to extremity 11a while extremity 11b is sealed over by a second cover 14.

In order to prevent part of the liquid from being drawn by the pump through the suction pipe 8, both the latter and inlet pipe 11 are arranged so as not to face each other. Provision is made in the partition 4 and in a bottom wall 15 with which the chamber is provided, for a first mushroom valve 16 and a second mushroom valve 18 respectively, which constitute valve means for alternate admission and prevention of passage of the liquid from first chamber 5 to second chamber 6 through valve 16, and from second chamber 6 to the outside through valve 18.

The valves, 16 and 18, are arranged in such a way that their opening comes about through downward movement of obturation means 16a and 18a respectively. In this way liquids are allowed to pass from the first to the second chamber when chambers 5 and 6 are at approximately the same pressure, since the obturation means 16a of valve 16 drops through force of gravity in opening the passage, but is prevented from doing so when chamber 6 is at pressure approximately equivalent to that of the atmosphere — the difference in pressure existing between the two chambers being such as to push the obturation means 16a of valve 16 upwards against the valve seat until the passage afforded to the liquids is quite closed (as stated before, first chamber 5 is maintained constantly at a pressure lower than atmospheric whilst the device is in operation). Likewise, valve 18 allows the liquid to pass from second chamber 6 to the outside when chamber 6 is at a pressure approximating to that of the atmosphere, and prevents the passage of liquid when chamber 6 is in a state of vacuum with respect to the outside — particularly when said chamber 6 is at a pressure almost equivalent to the level in chamber 5.

The device further comprises automatic means tripped by the level of liquid present in the first chamber 5 and designed to create pressure-levels — in second chamber 6 — either approximately equal to that of the atmosphere when the level of liquid in first chamber 5 is below a pre-set value, or alternately, approximately equal to that of said first chamber 5 when the level of liquid therein is above the pre-set value.

These said automatic means comprise a pneumatic distributor 20 located in the covering member 3. Provision is made for a cylindrical cavity 20b in the body 20a of said distributor — disposed with its axis vertical so as to communicate directly with first chamber 5 — within which a cursor 21 affixed to one extremity of a rigid rod 22 with like vertical axis, is caused to slide; the remaining extremity of said vertical rod 22 being fixedly attached to a float 23 located within the first chamber 5.

The float 23 is designed to pass an operating signal, determined by the level of liquid present in the first chamber 5, to said automatic means. Depending upon the position adopted by float 23, the cursor 21 slides in the cavity 20b of the distributor 20 and either opens or closes the paths of said distributor.

Furthermore, the said automatic means comprise a pneumatic valve 24 whose obturation means consist of a diaphragm 25 actuated by said distributor 20. The valve 24 consists of a lower annular cavity 26 disposed with its axis vertical and communicating directly — via an external channel 27 — with the second chamber 6 and, alternately, either with the outside or with the first chamber 5, and by an upper cavity 28 placed in communication — via channels to be described hereinafter — with the annular cavity 26 on a horizontal contact plane with interposition therebetween of the diaphragm 25, the non-operative position of which in fact defines said contact plane. At its central area, annular cavity 26 is provided with a coaxial hole 30, the upper extremity 30a of which is at an elevation slightly less than that of said contact plane and communicates directly with the first chamber 5.

The pneumatic distributor 20 and the pneumatic valve 24, operated by the level of liquid present in the first chamber 5 through float 23, place the second chamber 6 either in communication with the first chamber 5 or with the outside, in alternation.

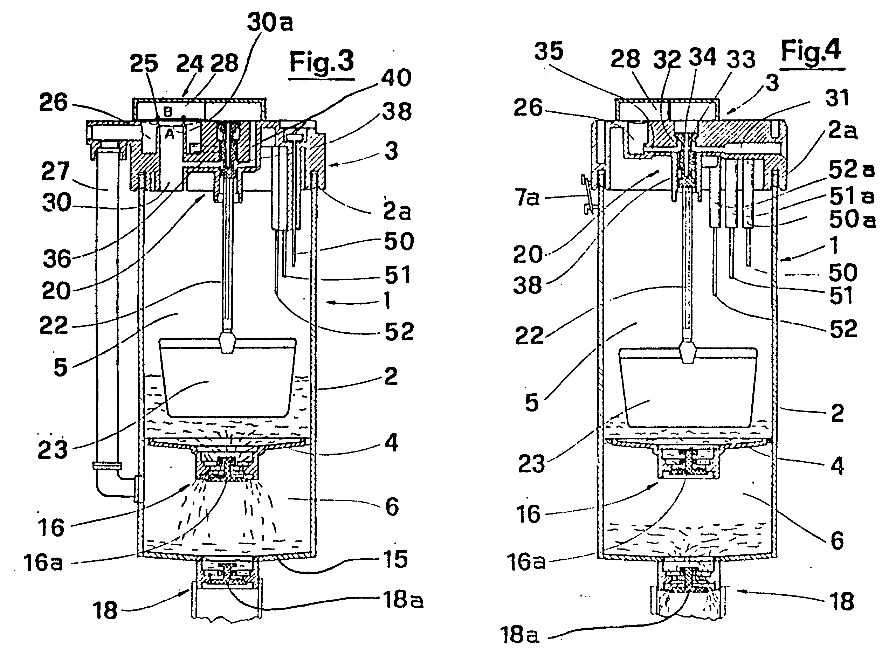

When, in fact, the level of liquid present in first chamber 5 is not sufficient to cause flotation of the float 23 (see fig. 4), the upper cavity 28 of pneumatic valve 24 is placed in communication with the outside via a first passage constituted by a channel 31 located in the covering member 3, the extremities of which communicate with the outside and with the cylindrical cavity 20b of the pneumatic distributor 20, respectively, by a first groove 32 located circumferentially in the cursor 21, and by channels 33 and 34 located within said cursor 21. The diaphragm 25 is thrust by the difference in pressure existing between upper cavity 28 and the hole 30 in the pneumatic valve, so as to close the extremity 30a of hole 30 (position A traced in fig. 3). The annular cavity 26 is placed in communication with the outside via a second passage constituted by channel 31, first groove 32 and a channel 35 located in covering member 3, the extremities of which communicate with the cylindrical cavity 20b of the pneumatic distributor and with annular cavity 26 of the pneumatic valve. in this way the second chamber 6, connected with annular cavity 26 as aforesaid, communicates with the outside and is thus at a pressure approximating to that of the atmosphere.

When the level of liquid present in the first chamber 5 is sufficient to cause the flotation of the float 23 (see fig. 3), the cursor is displaced upwards and thus closes the first passage and the second passage. The upper cavity 28 of pneumatic valve 24 is placed in communication with the first chamber 5 and thus taken to a pressure less than that of the atmosphere via a third passage consisting of channel 36 located in said covering member 3, the extremities of which 36 communicate with hole 30 in the pneumatic valve and with the cylindrical cavity 20b of the pneumatic distributor, respectively, by way of a second groove 38 located circumferentially in the cursor 21 and positioned underneath said first groove 32, and a channel 40 located in covering member 3, the extremities of which 40 communicate with cylindrical cavity 20b and with upper cavity 28, respectively. Because of the vacuum existing in said cavity 28, the diaphragm 25 rises from the extremity 30a of hole 30 (see fig. 3, position B) and allows communication between the first chamber 5 and annular cavity 26, hence between first chamber 5 and second chamber 6 which, in this way, is at a pressure approximately equivalent to that existing in the first chamber.

In order to stop the operation of the suction pump in the event that fluid extracted contains a greater quantity of liquid than can be evacuated by the device 1, three measuring contrivances 50, 51 and 52 are inserted in first chamber 5 at different respective heights. The insertion of the aforesaid level measuring devices is allowed by tubes 50a, 51a and 52a respectively, located in the covering member 3 and placing the upper part thereof in direct communication with first chamber 5.

Said level measuring contrivances 50, 51 and 52 supply an electrical signal when their lower extremity is immersed in the liquid and are wired so as to interrupt operation of the suction pump when all three have their extremity immersed in the liquid, and so as to re-start the pump when the level of liquid drops below that of the measuring contrivance 51. In this way it is possible to avoid the suction pump's drive motor being switched on and off in rapid succession.

The device described herein functions as follows: When the suction pump is operated, first chamber 5 is taken to a pressure lower than atmospheric. Fluid enters into the first chamber 5 extracted through one or more suction probes from the patient's mouth. Until such time as level of the liquid allows flotation of float 23, the second chamber 6 remains — as stated — at atmospheric pressure, valve 16 thus preventing liquid from passing from the first to the second chamber and in consequence preventing air from passing from the second to the first chamber. Once the level of liquid in chamber 5 is such as to allow flotation of the float 23, the latter moves upward (see fig. 3) and places first chamber 5 in communication with second chamber 6, as stated. The valve, being subject to all but identical pressure both from above and below, opens and allows liquid to pass from the first to the second chamber. At the same time, valve 18, subject to atmospheric pressure at bottom, closes and prevents the liquid from passing from the second chamber 6 to the outside and also prevents air from entering the second chamber 6. When the level of liquid in first chamber 5 drops below a value whereby flotation of float 23 is no longer possible, the latter returns downwardly to the position shown in fig. 4, whereupon valve 16 closes again and valve 18 re-opens thus allowing liquid present in the second chamber 6 to be evacuated to the outside.

Should the quantity of liquid extracted by the suction probe exceed the quantity that can be evacuated, then chamber 5 fills with liquid.

Once the level of liquid reaches the third measuring contrivance 50, operation of the suction pump is interrupted and chambers 5 and 6 reach atmospheric pressure. The valves, 16 and 18 then open and the liquid is discharged by force of gravity. The suction pump re-starts once the level of the liquid in chamber 5 descends to a lower level than that of the intermediate measuring contrivance 51.

**Claims**

1. Liquid separating and evacuating device for fluid suction equipment and, in particular, for dental surgery equipment, comprising:
— a first chamber (5) into which extracted fluid arrives, designed to bring about separation of the liquid and air constituting said fluid and kept at lower than atmospheric pressure throughout operation of the device;
— a second chamber (6) positioned beneath said first chamber (5);
— a pneumatic valve (24) whose obturation means consists of a diaphragm (25) actuated by a pneumatic distributor (20) tripped by the level of liquid present within the first chamber (5), which pneumatic valve (24) in a first position (A) of the diaphragm (25) places the second chamber (6) in communication with the atmosphere via an external channel (27), thereby creating a pressure level within said second chamber (6) which is substantially identical to that of the atmosphere when the level of liquid in said first chamber (5) is lower than a pre-set value (fig. 4);
— two chamber-bottom valve means (16, 18), an upper one (16) of which is designed for alternate admission and prevention of passage of liquid from said first chamber (5) to said second chamber (6), and the lower one (18) of which is designed for alternate admission and prevention of passage of liquid out of said second chamber (6), the lower chamber-bottom valve means (18) being arranged in such a way that passage of liquid out of said second chamber (6) is allowed only on the condition that the pressure therein approximates to that of the atmosphere (fig. 4) and is prevented on the condition that the pressure in said first (5) and second (6) chambers is approximately equal (fig. 3), characterised
— in that said pneumatic valve (24) in a second position (B) of the diaphragm (25) places the second chamber (6) in communication with the first chamber (5) via the external channel (27), thereby creating a pressure level within said second chamber (6) which is substantially identical to that of said first chamber (5) when the level of liquid therein is above said pre-set value (fig. 3);
— and in that the upper chamber-bottom valve means (16) is arranged in such a way that passage of liquid from the first (5) to the second (6) chamber is allowed only on the condition that the pressure in the two chambers (5, 6) is approximately equal (fig. 3) and prevented on the condition that the pressure in the second chamber (6) approximates to that of the atmosphere (fig. 4).

2. Device according to claim 1 comprising a float (23) enclosed within said first chamber (5) and to which one extremity of a vertically-disposed rigid rod (22) is affixed, the remaining extremity of said rod affixed coaxially to a vertical-axis cursor (21) forming part of said pneumatic distributor (20); said float (23) being designed to furnish said pneumatic valve (24) with an operating signal determined by the level of liquid existing within said first chamber (5).

3. Device according to the preceding claims comprising:

— a cylindrical container (2) disposed with its axis vertical and subdivided by an essentially horizontal partition (4) into two areas which constitute said first (5) and second (6) chambers; provision being made at said partition (4) and at the base wall (15) of said container for respective first (16) and second (18) mushroom valves constituting the aforesaid chamber-bottom valve means and arranged in such a way that opening thereof coincides with downward movement of their respective obturators (16a, 18a);

— and a covering member (3) attached to the upper border of said cylindrical container (2) so as to create a hermetical seal therewith.

4. Device according to claim 3 in which said covering member (3) comprises: a body (20a) of said pneumatic distributor (20), whose internal cylindrical cavity (20b) — disposed with its axis vertical and communicating directly with said first chamber (5) — accommodates said cursor (21) in sliding; said pneumatic valve (24) consisting of a lower annular cavity (26) communicating directly with said second chamber (6) and, in alternation, either with the atmosphere or with said first chamber (5), and by an upper cavity (28) communicating by way of appropriate conduits with said annular cavity (26) and attached to said upper cavity (28) within a horizontal plane of contact, the aforesaid diaphragm (25) being inserted therebetween; the central area of said annular cavity (26) affording a coaxial hole (30) communicating directly with said first chamber (5), the upper extremity (30a) of which lies within a plane slightly lower than that of said horizontal contact; said covering member (3) further comprising an inlet conduit (11) for extracted fluid, and a suction conduit (8) for withdrawal of air from said first chamber (5), both conduits (8, 11) communicating directly with said first chamber (5) and disposed other than in direct opposition to one another.

**Revendications**

1. Dispositif séparateur et évacuateur de liquide pour des installations d'aspiration de fluides, destinées particulièrement à des cabinets odontologiques, comportant:

— une première chamber (5), dans laquelle arrive le fluide aspiré, destinée à effectuer la séparation entre la partie liquide du fluide aspiré et l'air, cette chambre étant maintenue, lors du fonctionnement du dispositif, à une pression inférieure à la pression atmosphérique;

— une deuxième chambre (6) disposée audessous de la première chambre (5);

— une soupape pneumatique (24) dont l'obturateur consiste dans un diaphragme (25) commandé par un distributeur pneumatique (20) actionné par le niveau du liquide qui se trouve dans la première chambre (5), laquelle dans une première position (A) du diaphragme (25) met en communication la deuxième chambre (6) avec l'atmosphère par un conduit extérieur (27), ce qui crée dans la deuxième chambre (6) une pression à peu près égale à la pression atmosphérique quand le niveau du liquide dans la première chambre (5) est inférieur à une valeur prédéterminée (figure 4);

— deux soupapes (16), (18), disposées au fond des deux chambres, dont la supérieure (16) est destinée à permettre et empêcher alternativement le passage du liquide de la première chambre (5) à la deuxième chambre (6) et dont l'inférieure (18) est destinée à permettre et empêcher alternativement le passage du liquide à l'extérieur de la deuxième chambre (6), la soupape inférieure (18) étant arrangée de manière qu'elle ne permet le passage du liquide au-dehors de la deuxième chambre (6) que quand la pression dans cette chambre (6) est à peu près égale à la pression atmosphérique et qu'elle empêche le passage du liquide quand les pressions dans la première chambre (5) et dans la deuxième chambre (6) sont à peu près égales (figure 3), caractérisé

— en ce que ladite soupape pneumatique (24) dans la deuxième position (B) du diaphragme (25) met en communication la deuxième chambre (6) avec la première chambre (5) à travers le conduit extérieur (27), ce qui crée à l'intérieur de la deuxième chambre (6) une pression à peu près égale à la pression de la première chambre (5) quand le niveau du liquide dans la première chambre (5) est supérieur à ladite valeur prédéterminée (figure 3);

— et en ce que la soupape supérieure (16) est arrangée de manière que le passage du liquide de la première chambre (5) à la deuxième chambre (6) n'est permis que quand la pression dans les deux chambres (5) et (6) est à peu près égale (figure 3) et est empêché quand la pression dans la deuxième chambre (6) est à peu près égale à la pression atmosphérique (figure 4).

2. Dispositif selon la revendication 1, caractérisé en ce qu'il comporte un flotteur (23) contenu dans la première chambre (5), duquel est solidaire l'une des extrémités d'une tige rigide (22) disposée verticalement, l'autre extrémité de ladite tige à axe vertical étant solidaire du coulisseau (21) du distributeur pneumatique (20), ce flotteur (23) étant destiné à transmettre à la soupape pneumatique (24) le signal de commande déterminé par le niveau du liquide présent dans la première chambre (5).

3. Dispositif selon les revendications 1 et 2, caractérisé en se qu'il comporte un récipient cylindrique (2) disposé à axe vertical, divisé par une cloison (4) sensiblement horizontale, en deux zones qui constituent lesdites première (5) et deuxième (6) chambres; sur ladite cloison (4) et dans la paroi de fond (15) dudit récipient étant prévues respectivement une première soupape (16) et une deuxième soupape (18), toutes les deux en forme de champignon, qui constituent lesdites soupapes de pied des chambres, ces soupapes étant disposées de manière que leur ouverture ait lieu à cause du mouvement de l'obturateur respectivement (16a et 18a) vers le bas, un élément de couverture (3) étant fixé de manière étanche sur le bord supérieur dudit récipient cylindrique (2).

4. Dispositif selon les revendications 1 à 3, caractérisé en ce que ledit élément de couverture (3) comporte: le corps (20a) du distributeur pneumatique (20), dans la cavité intérieure cylindrique (20b) duquel, disposée à axe vertical et en communication directe avec la première chambre (5) coulisse le coulisseau (21); ladite soupape pneumatique (24) formée d'une cavité annulaire (26) inférieure en communication directe avec la deuxième chambre (6) et, alternativement, soit avec l'extérieur soit avec la première chambre (5), et d'une cavité supérieure (28) mise en communication, à travers des conduits appropriés, avec la cavité annulaire (26) et reliée à la cavité annulaire (28) dans un plan de contact horizontal avec l'interposition dudit diaphragme (25); la cavité annulaire (26) étant pourvue au centre d'un trou coaxial (30) dont l'extrémité supérieure (30a) se trouve à un niveau légèrement inférieur par rapport à celui du plan de contact et en communication directe avec la première chambre; ledit élément de couverture (3) comportant en outre un conduit d'entrée (11) pour le fluide aspiré et un conduit d'aspiration (8) qui permet l'aspiration de l'air de ladite première chambre (5), ces conduits (8—11) étant directement en communication avec la première chamber (5) et étant disposés de manière qu'ils ne sont pas en regard.

**Patentansprüche**

1. Flüssigkeitstrenn- und Ablassvorrichtung für Flüssigkeitsabsauganlagen, besonders in zahnärztlichen Behandlungsräumen, enthaltend:
— Eine erste Kammer (5), in der sich die abgesaugte Flüssigkeit sammelt und die dazu dient, die Trennung zwischen dem flüssigen Teil der abgesaugten Flüssigkeit und der Luft vorzunehmen, wobei die genannte Kammer während des Betriebes der Vorrichtung unter einem Druck gehalten wird, der geringer ist als der atmosphärische Druck;
— eine zweite Kammer (6), die sich unterhalb der genannten ersten Kammer (5) befindet;
— ein pneumatisches Ventil (24), dessen Verschluss aus einer Membrane (25) besteht, die von einem durch den Flüssigkeitsstand in der ersten Kammer (5) ausgelösten pneumatischen Verteiler (20) gesteuert wird, wobei die Kammer mit der Membrane (25) in einer ersten Position (A) die zweite Kammer (6) über eine äussere Leitung (27) mit der Atmosphäre in Verbindung bringt und damit einen Druck in der zweiten Kammer (6) herstellt, der ungefähr dem atmosphärischen Druck entspricht, wenn der Flüssigkeitsstand in der genannten ersten Kammer (5) niedriger ist als ein festgelegter Wert (Abb. 4);
— zwei Ventile (16), (18), angeordnet auf dem Boden der Kammern, von denen das obere (16) der beiden dazu dient, abwechseln den Durchlauf der Flüssigkeit von der genannten ersten Kammer (5) in die genannte zweite Kammer (6) zu ermöglichen und zu verhindern, und das zweite (18) abwechselnd den Ablauf der Flüssigkeit aus der genannten zweiten Kammer (6) zu ermöglichen und zu verhindern, wobei das untere Ventil (18) so ausgebildet ist, dass der Ablauf der Flüssigkeit aus der zweiten Kammer (6) nur dann möglich ist, wenn die zweite Kammer (6) einen Druck aufweist, der ungefähr dem atmosphärischen Druck entspricht, und dass der Ablauf der Flüssigkeit verhindert wird, wenn der Druck in der ersten Kammer (5) und in der zweiten Kammer (6) ungefähr gleich ist (Abb. 3), dadurch gekennzeichnet,
— dass das genannte pneumatische Ventil (24) in der zweiten Position (B) der Membrane (25) die zweite Kammer (6) über eine äussere Leitung (27) mit der ersten Kammer (5) in Verbindung bringt, wobei auf diese Weise im Inneren der zweiten Kammer (6) ein Druck erzeugt wird, der ungefähr dem Druck in der genannten ersten Kammer (5) entspricht, wenn der Flüssigkeitsstand in der ersten Kammer (5) höher ist als der genannte festgelegte Wert (Abb. 3);
— wobei das obere Ventil (16) so ausgebildet ist, dass der Durchlauf der Flüssigkeit von der ersten Kammer (5) zu der zweiten Kammer (6) nur dnan erfolgt, wenn der Druck in den beiden Kammern (5), (6) ungefähr gleich ist (Abb. 3), und dann verhindert wird, wenn der Druck in der zweiten Kammer (6) ungefähr dem atmosphärischen Druck entspricht (Abb. 4).

2. Vorrichtung nach dem vorstehenden Patentanspruch, dadurch gekennzeichnet, dass sie einen Schwimmer (23) enthält, der sich in der genannten ersten Kammer (5) befindet, und mit dem das eine Ende einer starren und senkrecht angeordneten Spindel (22) fest verbunden ist, während an dem anderen Ende der genannten Spindel der Läufer (21) mit vertikaler Achse des genannten pneumatischen Verteilers (20) befestigt ist, wobei der genannte Schwimmer (23) dazu dient, dem genannten pneumatischen Ventil (24) das Steuersignal zu übermitteln, das durch den Flüssigkeitsstand in der ersten Kammer (5) ausgelöst wird.

3. Vorrichtung nach den vorstehenden Patentansprüchen, dadurch gekennzeichnet, dass sie einen zylindrischen Behälter (2) enthält, der nach einer vertikalen Achse angeordnet und durch eine grundsätzlich horizontale Trennwand (4) in zwei Bereiche unterteilt ist, welche die genannte erste (5) und die genannte zweite Kammer (6) bilden, wobei in der genannten Trennwand (4) und in dem Boden (15) des genannten Behälters jeweils ein erstes (16) und ein zweites Pilzventil (18) vorgesehen ist, welche die genannten Bodenventile der Kammern bilden, und zwar beide so angeordnet, dass ihre Öffnung mit der jeweiligen Bewegung des Verschlusses nach unten (16a) und (18a) erfolgt, wobei an dem oberen Rand des genannten zylindrischen Behälters (2) dicht abschliessend ein Abdeckelement (3) angebracht ist.

4. Vorrichtung nach den vorstehenden Patentansprüchen, dadurch gekennzeichnet, dass das genannte Abdeckelement (3) wie folgt enthält: Den Körpers (20a) des genannten pneumatischen Verteilers (20), in dessen zylindrischem Hohlraum (20b) nach vertikaler Achse angeordnet und direkt mit der genannten ersten Kammer (5) in Verbindung stehend sich der genannte Läufer (21) bewegt; das genannte pneumatische Ventil (24), bestehend aus einem ringförmigen unteren Hohlraum (26), der direkt mit der genannten zweiten Kammer (6) in Verbindung steht und abwechselnd entweder mit dem Aussenbereich oder mit der genannten ersten Kammer (5), und aus einem oberen Hohlraum (28), der durch entsprechende Leitungen mit den genannten ringförmigen Hohlraum (26) in Verbindung gebracht wird und mit dem genannten ringförmigen Hohlraum (28) auf einer horizontalen Kontaktfläche durch das Zwischensetzen der genannten Membrane (25) verbunden ist, wobei der ringförmige Hohlraum in seinem mittleren Bereich eine koaxiale Bohrung (30) hat, deren oberes Ende (30a) eine leicht niedrigere Quote aufweist als die der genannten Kontaktfläche und die direkt mit der genannten ersten Kammer in Verbindung steht; das genannte Abdeckelement (3) enthält ausserdem eine Eingangsleitung (11) für die angesaugte Flüssigkeit und eine Ansaugleitung (8), um das Ansaugen der Luft aus der genannten ersten Kammer zu ermöglichen, wobei die genannten Leitungen (8, 11) direkt mit der ersten Kammer (5) in Verbindung stehen und wobei sie nicht einander zugewandt angeordnet sind.

Fig.1

Fig.2

0013667

Fig.3

Fig.4

0013667